Europäisches Patentamt

European Patent Office

Office européen des brevets

(19)

(11) Veröffentlichungsnummer: **0 012 875**
**A1**

(12) **EUROPÄISCHE PATENTANMELDUNG**

(21) Anmeldenummer: **79104803.6**

(22) Anmeldetag: **01.12.79**

(51) Int. Cl.³: **C 08 G 65/30**

(30) Priorität: **16.12.78 DE 2854541**

(43) Veröffentlichungstag der Anmeldung:
**09.07.80 Patentblatt 80/14**

(84) Benannte Vertragsstaaten:
**BE CH DE FR GB IT NL**

(71) Anmelder: **BAYER AG**
**Zentralbereich Patente, Marken und Lizenzen**
**D-5090 Leverkusen 1, Bayerwerk(DE)**

(72) Erfinder: **Boehmke, Günter, Dr.**
**Kurt-Schumacher-Ring 152**
**D-5090 Leverkusen 1(DE)**

(54) Nichtionische Emulgatoren und Verfahren zu ihrer Reinigung.

(57) Nichtionische Emulgatoren vom Typ der Anlagerungsprodukte von Alkylenoxiden an Hydroxyl-, Carboxyl- oder Carbonamidgruppenhaltige Verbindungen, die frei von durch die Herstellung bedingten Verunreinigungen sind, werden erhalten durch Lösen der Reaktionsmischungen in organi-schen, mit Wasser nicht mischbaren organischen Lösungs-mitteln, Behandlung mit Wasser, Abtrennen der wäßrigen Schicht und gegebenenfalls Isolierung der Emulgatoren durch Entfernung der organischen Lösungsmittel.

EP 0 012 875 A1

BAYER AKTIENGESELLSCHAFT        5090 Leverkusen, Bayerwerk

Zentralbereich                  Mi/Th
Patente, Marken und Lizenzen

## Nichtionische Emulgatoren und Verfahren zu ihrer Reinigung

Gegenstand der Erfindung ist ein Verfahren zur Reinigung nichtionischer Emulgatoren vom Typ der Anlagerungsprodukte von Alkylenoxiden an Hydroxyl-, Carboxyl- oder Carbonamidgrupppen-haltige Verbindungen, z.B. Alkyl-, Alkylaryl-, Araikylphenyl-, Acylamino- und Acyl-polyglykol, der Acyl-polyole und Acyl-polyol-polyglykole, von durch die Herstellung bedingten Verunreinigungen mit Polyglykolen, Polyolen oder Polyol-polyglykolen. Das Verfahren ist dad. gekennzeichnet, daß Lösungen der Reaktionsmischungen in mit Wasser nichtmischbaren organischen Lösungsmitteln mit einer der Verunreinigungen etwa entsprechenden Menge Wasser versetzt werden, die sich ausbildende, wäßrige Schicht abgetrennt und die Emulgatorschicht gegebenenfalls getrocknet und vom Lösungsmittel befreit wird.
Gegenstand der Erfindung sind außerdem die nach diesem Verfahren gereinigten Emulgatoren.

Le A 19 284-Ausland

Bei der Herstellung nichtionischen Tenside entstehen
Verunreinigungen durch die Verwendung von Katalysatoren
bei der Alkoxylierung, insbesondere Ethoxylierung oder
Propoxylierung, oder der Umesterung in Form von Salzen,
Polyglykolen, Polyolen oder Polyol-polyglykolen. Beispielsweise wird die Oxyalkylierung eines Fettalkohols
mit Hilfe von Kalilauge katalysiert. Durch die Anwesenheit des Hydroxylions wird eine diesem äquivalente
Menge an Polyalkylenglykol erzeugt. Die Feuchtigkeit
in den Rohstoffen, in der Apparatur oder der Polyalkylenglykol-Gehalt im Alkylenoxid führen zu vermehrten Nebenreaktionen und erhöhtem Polyglykol-Gehalt.

Während der Alkoxylierung von Carbonsäuren treten neben
der Veresterung und Veretherung auch Umesterungen auf,
da im Oxyalkylierungsansatz ideale Umesterungsbedingungen
durch die Alkalialkoholate bestehen, die sich im Laufe
der alkalikatalysierten Reaktion bilden. So kann man
bei der Herstellung von Acyl-polyglykolen das zu errechnende statistische Mittel zwischen Monoestern, Diestern und bis zu 15 % Polyglykolen erwarten.

Ähnliche Verhältnisse findet man bei der Oxyalkylierung
von Rizinusöl oder Mono- und Diglyceriden.

Wenn diese nichtionischen Tenside als Textilchemikalien
und als Waschmittel eingesetzt werden, stören die Nebenprodukte im allgemeinen nicht oder können sogar erwünscht
sein. So können einige Prozente an Polyglykolen in Alkylpolyglykolen die Auflösegeschwindigkeit in Wasser erhöhen, da die Gelbildung mit wenig Wasser vermindert wird.

Dagegen werden bei der Verwendung als Emulgator die Eigenschaften negativ beeinflußt. Z.B. geht die Wirksamkeit zurück, und beim Einsatz in Mischemulgatoren kann die synergistische Wirkung ganz verloren gehen und damit die Verwendung unmöglich werden.

In hochkonzentrierten Wirkstoffemulsionen kann z.B. die Viskosität durch die Entfernung der Polyglykole aus dem oxyalkylierten Rizinusölemulgator stark herabgesetzt werden.

Emulgierbare Pflanzenschutzkonzentrate erreichen ihre Lagerstabilität und die Spontanität der Emulsion erst mit gereinigter, nichtionischer Emulgatorkomponente.

Besonders störend wirken sich die Verunreinigungen bei Wasser-in-Öl-Emulsionen aus. Die Wirksamkeit, die Stabilität und die Viskosität werden stark beeinflußt.

Für die analytische Bestimmung der Polyglykole in nichtionischen Tensiden gibt es eine Reihe von Verfahren, von denen hier beispielhaft angeführt seien, da sie gleichzeitig eine Trennung beinhalten:

Le A 19 284

1. Extraktion einer Essigester-Lösung des Tensids mit einer 5 - 15 %igen Natriumchlorid-Lösung.

2. Adsorption des nichtionischen Tensids an einem COOHgruppenhaltigen-Ionenaustauscher und Eluierung mit einem Lösungsmittel.

3. Gelchromatographie

Keine dieser Methoden ist für den technischen Einsatz geeignet, da zu starke Verdünnungen und zu hohe Salzgehalte erforderlich sind.

Bei der technischen Herstellung reiner, nichtionischer Emulgatoren wurden bisher die Eigenschaften dieser Klasse genutzt, sich aus wäßriger Lösung aus der Lösung durch Erhitzen abzuscheiden. Es entsteht eine wäßrige Phase und eine stark wasserhaltige Emulgatorphase. Diese muß dann durch Abdestillieren des Wassers getrocknet werden (sh. DRP 828 839).

Nicht alle Emulgatoren führen bei dieser Methode zu sauberer Phasentrennung, und diejenigen mit einer Kette von über 20 Alkylenoxid-Einheiten lassen sich hiermit gar nicht mehr reinigen, da sie keinen Trübungspunkt beim Erhitzen aufweisen.

Die als Verunreinigung auftretenden Polyalkylenglykole lösen sich nun wie die Emulgatoren in den erfindungsge-

Le A 19 284

mäß vorgeschlagenen, mit Wasser nicht mischbaren organischen Lösungsmitteln. Bevorzugte Lösungsmittel sind aromatische Lösungsmittel, insbesondere Benzol, das durch $C_1$-$C_4$-Alkylgruppen oder Halogen substituiert sein kann. Als Beispiele seien genannt: Benzol, Toluol, Xylol, Chlorbenzol, Dichlorbenzol, Äthylbenzol und Isopropylbenzol und besonders Toluol. Während die 1% - 90 %igen Lösungen der Emulgatoren bei Zusatz von 1 - 20 % Wasser dieses im Lösungsmittel auflösen bzw. opal emulgieren, werden die Polyglykole aus den aromatischen Lösungsmitteln bei Zugabe kleiner Mengen Wasser abgeschieden.

Überraschend ist es nun, daß diese Abscheidung quantitativ gelingt und insbesondere, daß auch bei einem Überschuß des Emulgators von 99:1 noch eine Abscheidung der wäßrigen, hochkonzentrierten Polyalkylenglykol-Lösung möglich ist. Dazu werden die Salze, die nach der Neutralisation des Katalysators anfallen, ebenfalls abgeschieden, während die Verluste des Emulgators in die wäßrige Phase sich um die zehntel Pronzente bewegen.

Die abgeschiedene, wäßrige Phase ist etwa 40 - 60 %ig und läßt sich somit zur Abfallbeseitigung direkt verbrennen.

Das erfindungsgemäße Reinigungsverfahren erweitert die bekannten Verfahren durch die Fähigkeit, auch Addukte mit 20 - 100 Mol Ethylenoxid-Einheiten reinigen zu

Le A 19 284

können, mit sehr hohen Konzentrationen zu arbeiten, sehr hohe Konzentrationen Polyalkylenglykol in der wäßrigen Phase zu erreichen, sehr wenig Wasser in der Emulgatorphase zu benötigen, auch bei Acylpolyolen anwendbar zu sein, mit für Emulsionen üblichen, preiswerten Lösungsmitteln, bei niedrigen oder nur wenig erhöhten Temperaturen zu arbeiten.

Spezielle nichtionische Emulgatoren, die mit wenig Wasser eingestellt, hochviskose Gele bilden, wie z.B. oxyethylierte Fettsäureamide, lassen sich nach den bekannten, technischen Methoden nicht reinigen, sind jetzt aber nach dem erfindungsgemäßen Verfahren frei von Polyethylenglykol zugänglich.

Eine vorteilhafte Ausführungsform der Emulgatorreinigung besteht darin, daß man die 40 - 70 %ige, insbesondere 50 - 60 %ige, Toluollösung der Reaktionsmischung bei 20 bis 50°C, insbesondere 20 - 40°C, mit 2-25 %, insbesondere 10 % Wasser verrührt, beispielsweise während 10 Minuten und dann absitzen läßt. Die untere wäßrige Polyglykol-Lösung wird abgetrennt. In der technischen Anwendung kann die Trennung über Separatoren schnell und kontinuierlich ausgeführt werden.

Zur analytischen Bestimmung dampft man das Wasser aus der wäßrigen Schicht und bestimmt mit großer Genauigkeit den Polyglykol-Gehalt.

Le A 19 284

Bei wiederholter Produktion und dadurch bekanntem Gehalt an Verunreinigungen kann man die Wassermenge eventuell noch reduzieren und dadurch den Wassergehalt der Emulgatorschicht vermindern.

Je nach Ablauf der Produktion und den Eigenschaften des Produktes kann es auch vorteilhaft sein, das Wasser zuerst in der Reaktionsmischung zu lösen und dann das organische Lösungsmittel zuzumischen.

Viele Anwendungen des Emulgators lassen sich direkt mit dieser Toluollösung bestreiten. In anderen Fällen wirkt sich eine Andestillation, die eine vollständige Trocknung bewirkt, vorteilhaft aus. Wenn Feuchtigkeit und Lösungsmittel stören, läßt sich beides leicht entfernen, und der reine Emulgator ist einsatzbereit.

Die nichtionischen Emulgatoren sind beschrieben in N. Schönfeldt "Äthylenoxidaddukte" Wissenschaftliche Verlagsgesellchaft Stuttgart (1976) und M. Schick, "Nonionic Sufactants" Marcel Dekker Verlag N.Y.(1966).

Die Reinigungsoperation läuft so genau reproduzierbar, daß sie auch als analytische Methode, besonders zur Produktionskontrolle, eingesetzt werden kann.

Le A 19 284

Beispiel 1

100 g Di-phenyläthyl-phenol mit 14 Mol Ethylenoxid
in Gegenwart von KOH oxyäthyliert und mit Essigsäure
nachträglich neutralisiert, werden in 100 ccm Toluol
gelöst und mit 10 ccm Wasser 10 Minuten verrührt. Dann
läßt man die trübe Lösung absitzen (1-3 Stunden). Es
können ca. 7 - 8 g wäßrige Lösung unten abgetrennt
werden.

Nach Trocknung können 4,5 g Rückstand bestimmt werden.
Durch Lösung in Aceton, Filtration und Trocknung des
Rückstandes lassen sich 0,3 g Kaliumacetat feststellen.

Die Emulgator ist nach Trocknung (durch azeotrope
Destillation) für Pflanzenschutzformulierungen ohne
Beeinträchtigung der Lagerstabilität und der Emulsionsqualität einsetzbar.

Eine Reinigung bekannter Art durch Mischen mit der zweifachen Menge Wasser, erhitzt auf 100°C, Abtrennung der
obenstehenden Wasserschicht und Aufarbeitung der beiden
Schichten ist aus ökologischer, energetischer und
technischer Sicht weitaus ungünstiger. Die wäßrige
Schicht kann wegen der Verdünnung (3-4 %ig) nicht direkt
verbrannt werden, und die Emulgatorschicht muß von etwa
dergleichen Menge Wasser durch Destillation befreit
werden, wobei Stadien gelartiger Zustände durchlaufen
werden müssen.

Le A 19 284

Beispiel 2

100 g des festen Emulgators, die durch Addition von
50 Mol Ethylenoxid an Di-phenylethyl-phenol erhalten
wurden, löst man durch Verrühren und Erwärmen (ca. 40$^{o}$)
in 100 ccm Toluol. 15 ccm Wasser werden durch Rühren
gut in der Lösung verteilt. Nach 3 Stunden kann man
unten eine wäßrige Schicht abtrennen. Aus den abgetrennten 12 g Lösung verbleibt beim Eindampfen ein
Rückstand an Polyglykolether (PEG) von 6,6 g, der bei
Raumtemperatur fest ist und der den Katalysator der
Oxyethylierung (weitgehend in Form des Carbonates)
enthält. Der Emulgator ist jetzt frei von Polyethylenglykol und anorganischen Bestandteilen.

Löst man 100 g eines derart gereinigten Emulgators
in 100 ccm Toluol und gibt zur Kontrolle nochmals 10 ccm
Wasser unter Rühren hinzu, so bleibt die Lösung im Gegensatz zu vorher klar durchsichtig, d.h. das Wasser wird
homogen emulgiert.

Eine andere Reinigung gelingt hier nicht, da durch Erhitzen mit Wasser keinerlei Abtrennung zu erzielen ist,
weil der Emulgator keinen Trübungspunkt zeigt.

Beispiel 3

100 g Emulgator, aus Rizinusöl und 40 Mol Ethylenoxid
in Gegenwart von KOH hergestellt, werden mit 17 g Wasser

Le A 19 284

vermischt und anschließend 15 Minuten mit 100 ccm Toluol verrührt. Nach 1-2 Stunden Stehen können 22 g einer Polyethylenglykol-haltigen Schicht abgetrennt werden, die 12,8 g Trockensubstanz enthalten.

Die klare Toluollösung läßt sich mit der 4-fachen Menge Toluol verdünnen. Die aus dieser Emulgatorlösung herstellbare Emulsion in Wasser weist eine erheblich bessere Stabilität auf als eine mit dem ungereinigten Emulgator hergestellte Emulsion.

Mit Benzol wird ein entsprechender Reinigungseffekt erreicht.

Beispiel 4

100 g Emulgator, aus Rizinusöl und 20 Mol Ethylenoxid erhalten, werden mit 10 g Wasser und 100 ccm Toluol verrührt. Man trennt die wäßrige Schicht unten ab und befreit die Emulgatorschicht im Vakuum von Wasserresten und Toluol.

Mit dem gereinigten Emulgator lassen sich klare Einstellungen in Mineralölen bzw. Weißöl herstellen, die dann zu stabilen Emulsionen in Wasser emulgiert werden können.

Nicht gereinigter Emulgator löst sich nicht klar in den weitgehend paraffinischen Ölen.

Le A 19 284

Mit niederen Aliphaten geben die gereinigten Emulgatoren des Rizinusöls mit ähnlichem EO-Gehalt stabile, niedrigviskose W/O-Emulsionen.

Beispiel 5

Vom Oxyäthylierungsprodukt der Ölsäure mit 6 Mol EO wird in Toluol eine 50 %ige Lösung in Toluol hergestellt. Hierein rührt man 10 % Wasser, bezogen auf Emulgator und separiert die untere, wäßrige Schicht, die 7 % vom eingesetzten Emulgator an Polyethylenglykol enthält. Die Emulgator-Toluol-Lösung wird über eine Dünnschicht-Apparatur von Toluol und Wasser befreit.

Der gereinigte Emulgator ist jetzt gut löslich in paraffinischen Mineralölen, deren stabile Emulsionen in Wasser als Kühlschmiermittel verwendet werden können.

Beispiel 6

Isononylphenol mit 6 Mol EO oxyethyliert, wirkt mit ca. 10 % Einsatzmenge gut als Emulgator für Mineralöle, die als Faserpräparation eingesetzt werden. Doch sind die Mischungen nicht lagerbeständig, sondern trüben bald ein. Dagegen werden mit einem über Toluol nach Beispiel 1 gereinigten Emulgator, bei dem 1,5-2,5 % Polyethylenglykol und der Oxyethylierungskatalysator abgetrennt wurde, lagerstabile Lösungen erhalten.

Le A 19 284

Beispiel 7

Kokosfettalkohol ($C_{12}$-$C_{16}$) mit 7 Mol EO oxyethyliert, wird nach Beispiel 1 gereinigt. Vom Toluol wird nur soviel abdestilliert, bis das Wasser azeotrop entfernt wird. Eine Formulierung mit 10 % Parathion, 12 % des gereinigten Emulgators und den Rest an paraffinischem Öl (Kp 180 - 250°) ist monatelang physikalisch und chemisch stabil, so daß keine Einbuße an Wirksamkeit und Emulsionsstabilität beobachtet werden können.

Beispiel 8

Ein Veresterungsprodukt von 1 Mol Ölsäure mit 1 Mol Glycerin unter Abspaltung von Wasser wird nach Beispiel 1 von unumgesetztem Glycerin befreit. Das Toluol und das restliche Wasser werden abdestilliert.

Während sowohl das Rohprodukt wie das gereinigte Monoglycerid als Entschäumer eingesetzt werden können, ist nur das gereinigte Produkt für eine Abmischung mit Triglyceriden (oder Paraffinölen) geeignet, um dann als Entschäumer-Emulsion verwendet werden zu können. Das Glycerin (Polyglycerin) ist in den genannten Ölen völlig unlöslich.

Le A 19 284

Patentansprüche

1. Verfahren zur Reinigung nichtionischer Emulgatoren vom Typ der Anlagerungsprodukte von Alkylenoxiden an Hydroxyl-, Carboxyl- oder Carbonamidgruppenhaltige Verbindungen von durch die Herstellung bedingten Verunreinigungen, dadurch gekennzeichnet, daß man die Reaktionsmischungen in organischen, mit Wasser nicht mischbaren organischen Lösungsmitteln löst, mit Wasser behandelt, die wäßrige Schicht abtrennt und gegebenenfalls die Emulgatoren durch Entfernung der organischen Lösungsmittel isoliert.

2. Verfahren nach Anspruch 1, dadurch gekennzeichnet, daß man Alkyl-, Alkylaryl-, Aralkylphenyl-, Acyl- oder Acylamino-polyglykole von bei ihrer Herstellung gebildeten Polyglykolen, Polyolen bzw. Polyol-polyglykolen reinigt.

3. Verfahren nach Anspruch 1, dadurch gekennzeichnet, daß man als organisches Lösungsmittel Benzol, das durch $C_1$-$C_4$-Alkylgruppen oder Halogen substituiert sein kann, insbesondere Toluol verwendet.

4. Verfahren nach Anspruch 1, dadurch gekennzeichnet, daß man eine 40 - 70 %ige, insbesondere 50 - 60 %ige, Lösung der Reaktionsmischung in dem organischen Lösungsmittel bei 20 - 50°C, insbesondere 20-40°C,

Le A 19 284

mit 2 - 25 %, insbesondere 10 %, Wasser verrührt und die wäßrige Schicht entfernt.

5. Verfahren nach Anspruch 1, dadurch gekennzeichnet, daß man nichtionische Emulgatoren mit einer Kette von über 20 Alkylenoxid-Einheiten reinigt.

6. Emulgatoren vom Typ der Anlagerungsprodukte von Alkylenoxiden an Hydroxyl-, Carboxyl- oder Carbonamidgruppen enthaltende Verbindungen, dadurch gekennzeichnet, daß sie erhalten werden durch Lösen der Reaktionsmischungen, die bei der Herstellung der Anlagerungsprodukte entstehen, in mit Wasser nicht mischbaren organischen Lösungsmitteln, Behandlung mit Wasser, Abtrennung der wäßrigen Schicht und ggf. Entfernung der organischen Lösungsmittel.

Europäisches
Patentamt

**EUROPÄISCHER RECHERCHENBERICHT**

0012875
Nummer der Anmeldung

EP 79 10 4803

| Kategorie | EINSCHLÄGIGE DOKUMENTE | | KLASSIFIKATION DER ANMELDUNG (Int.Cl. 3) |
|---|---|---|---|
| | Kennzeichnung des Dokuments mit Angabe, soweit erforderlich, der maßgeblichen Teile | betrifft Anspruch | |
| D | <u>DE - C - 828 839</u> (FA. RANORGANA)<br>* Anspruch 1 *<br><br>-- | 1 | C 08 G   65/30 |
| | <u>DE - A - 2 026 422</u> (WYANDOTTE)<br>* Anspruch 1 *<br><br>-- | 1 | |
| | <u>FR - A - 2 338 958</u> (UGINE <u>KUHLMANN</u>)<br>* Anspruch 1 *<br><br>-- | 1 | **RECHERCHIERTE SACHGEBIETE (Int. Cl. 3)**<br><br>C 08 G 65/30 |
| | <u>US - A - 3 823 145</u> (J.F. LOUVAR)<br>* Anspruch 1 *<br><br>-- | 1 | |
| | <u>FR - A - 2 174 670</u> (MARLES-<u>KUHLMANN-WYANDOTTE</u>)<br>* Ansprüche 1,2,3,5; Seite 4, Zeilen 32-33 *<br><br>-- | 1 | |
| | <u>FR - A - 2 294 202</u> (BASF WYANDOTTE)<br>* Ansprüche 1, 6 *<br><br>---- | 1 | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 27-03-1980 | DEPIJPER |